(19) Europäisches Patentamt / European Patent Office / Office européen des brevets

(11) EP 4 733 989 A1

(12) **EUROPEAN PATENT APPLICATION**

(43) Date of publication:
29.04.2026 Bulletin 2026/18

(21) Application number: 25205011.7

(22) Date of filing: 26.09.2025

(51) International Patent Classification (IPC):
G06N 3/045 (2023.01)    G06N 3/084 (2023.01)
G06N 10/20 (2022.01)    G06N 10/60 (2022.01)

(52) Cooperative Patent Classification (CPC):
G06N 3/084; G06N 3/045; G06N 10/20;
G06N 10/60

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority:   22.10.2024   PCT/IB2024/000540
05.11.2024   EP 24210818
12.11.2024   US 202418944603

(71) Applicant: **Multiverse Computing S.L.**
**Gipuzkoa (ES)**

(72) Inventors:
• **Aizpurua, Borja**
**20014 Donostia-San Sebastián (ES)**
• **Siddhartha, Patra**
**20014 Donostia-San Sebastián (ES)**
• **Singh, Sukhbinder**
**Toronto, M5C 2T2 (CA)**
• **Orus, Roman**
**20014 Donostia-San Sebastián (ES)**

(54) **HYBRID QUANTUM-CLASSICAL TRAINING OF TRANSFORMER-BASED LANGUAGE MODELS USING TENSOR NETWORKS AND VARIATIONAL QUANTUM CIRCUITS**

(57)     A computer-implemented method is disclosed for training a transformer-based large language model (LLM) using a hybrid quantum-classical architecture. The method comprises compressing input data into a matrix product state (MPS) tensor network, deriving a variational quantum circuit (VQC) from the MPS, and integrating the variational quantum circuit (VQC) into transformer layers prior to the weight matrices of self-attention and multilayer perceptron (MLP) components. The resulting quantum-circuit-based LLM (QC-LLM) is first trained in a classical tensor network quantum simulator using gradient-based optimization and then fine-tuned on a quantum processor using gradient-free techniques. A classical output vector is sampled from the resulting quantum state and integrated back into the transformer to enhance semantic representation. The method improves model expressivity, injects global correlations, and enables quantum-enhanced inference and training under constrained hardware conditions.

Selecting at least one of the individual transformer layers by structured noise or synthetic inputs

↓

Encoding an input data into a Matrix Product State (MPS);

↓

obtaining a VQC from the MPS and an MPO from the selected layer

↓

modifying transformer layer of the LLM by integrating the VQC prior to each corresponding weight matrix of the self-attention layers and MLP components

↓

training quantum-circuit-based large language model (QC-LLM), which is the modified large language model, within a tensor network quantum simulator

← Quntum Sending — performing, by the quantum computer (Q), a fine-tuning process to the QC-LLM;

↓ Quantum Receiving →

Sampling an output vector from the quantum state; and integrating the output vector into the LLM architecture.

Figure 3A

**Description**

**CROSS-REFERENCE TO RELATED APPLICATIONS**

None.

**TECHNICAL FIELD OF THE INVENTION**

The present disclosure relates to methods for improving the computational efficiency and performance of large language models (LLMs) by training using Tensor Networks (TNs) and quantum computers.

Specifically, but without limitation, the disclosure pertains to training self-attention layers and multilayer perceptron (MLP) components of the LLMs with a combination of quantum circuits and trains it on tensor network quantum simulation and quantum computers for enhancing the performance of large language models (LLMs).

**BACKGROUND OF THE INVENTION**

Large Language Models (LLMs) have emerged as a cornerstone of modern Natural Language Processing (NLP), driving advances in machine translation, generative dialogue, summarization, and semantic analysis. Architectures such as Transformer-based models (e.g., GPT, LLaMA, BERT) have demonstrated state-of-the-art performance but suffer from extreme parameter redundancy, memory footprint, and computational inefficiency. These challenges are particularly evident during model training and inference on resource-constrained devices or in real-time applications.

Primarily, the size and depth of large language models (LLMs) result in excessive demands on computational resources, memory bandwidth, and energy consumption. These challenges become particularly acute during training and inference phases, limiting the deployment of LLMs on edge devices or in latency-sensitive applications. In classical implementations, the deep layers of LLMs-particularly self-attention mechanisms and multilayer perceptron (MLP) layers-are implemented using dense weight matrices. These contribute to both high parameter counts and entangled representations that are computationally expensive to manage. Also, present-day quantum devices, also referred to as Noisy Intermediate-Scale Quantum (NISQ) processors, are constrained by limited qubit numbers, short coherence times, and high gate error rates, which prevent them from executing the deep and stable quantum circuits required for LLM training. Moreover, quantum training techniques based on variational quantum circuits (VQCs) often encounter the barren plateau problem, where gradients vanish and optimization becomes impractical as circuits scale. Many shallow or weakly entangled circuits are further shown to be classically simulable, reducing any potential benefit from quantum execution. For these reasons, end-to-end training of LLMs on quantum hardware is not feasible with current technology, and hybrid approaches are needed in which most training is performed classically while reserving quantum processors for limited refinement stages.

Conventional approaches to compressing and accelerating LLMs include weight pruning, quantization, knowledge distillation, and tensor decomposition. While these techniques offer partial alleviation, they often degrade model performance or lack scalability to deeper architectures. Moreover, such approaches remain purely classical and do not exploit emerging hybrid computational frameworks that combine classical and quantum resources.

Furthermore, tensor network (TN) representations, such as Matrix Product States (MPS) and Matrix Product Operators (MPO), offer significant model compression and differentiable training on classical processors. However, they have not been systematically integrated with quantum post-training refinement to harness both classical efficiency and quantum-enhanced expressivity.

Currently, Noisy Intermediate-Scale Quantum (NISQ) devices are not suitable for training large language models (LLMs) due to a combination of hardware limitations and algorithmic constraints. Especially, available qubits are subject to short coherence times and high gate error rates, causing quantum states to decohere before completion of deep circuits necessary for meaningful LLM parameter updates. Also, training LLMs typically requires gradient-based optimization, but quantum hardware cannot yet perform large-scale, differentiable, end-to-end training without encountering the barren plateau phenomenon, in which gradients vanish exponentially with system size or depth, halting convergence.

Andrei Tormut Et Al. CompactifAI: Extreme Compression of Large Language Models using Quantum-Inspired Tensor Networks, arXiv preprint arXiv:2401.14109 (2024), which introduces tensor network factorization of pre-trained LLM weights using Matrix Product Operators (MPOs). According to this method, a quantum inspired method compresses the trained LLMs and reduces the re-training costs. Tensor networks compress LLMs by focusing on their internal correlation structures. This publication focusses on optimizing classical architectures such as above mentioned LLMs, by using quantum-inspired tensor networks such as Matrix Product Operators. However, the methodology remains entirely classical and does not integrate quantum processing, thus lacking the ability to exploit entanglement structure or quantum parallelism for performance gain.

Another relevant work, "Quantum Large Language Models via Tensor Network Disentanglers" by B. Aizpurua et al., arXiv:2410.17397v1 (2024), proposes enhancing large language models (LLMs) by replacing both the self-attention and MLP layers with variational quantum circuits (VQCs). This is achieved through tensor network disentanglers and MPO-based decomposition of the original weight matrices. While this method structurally reconstructs classical layers, it discards the fine-tuned expressivity and inductive biases of the original transformer components, and more critically, it requires full quantum training of deep subcircuits. Such training is highly susceptible to barren plateaus-regions of the optimization landscape where gradients vanish exponentially-particularly when applied to high-dimensional or unstructured VQCs representing full LLM blocks. This greatly limits scalability and convergence, especially without access to rich classical pretraining. In contrast, the present invention retains standard transformer layers and introduces the VQC only as a lightweight, auxiliary module. This VQC is trained classically within a tensor network simulator and only fine-tuned on quantum hardware. By isolating quantum involvement to targeted modules and avoiding full quantum substitution, our method preserves baseline LLM performance and avoids the barren plateau risks associated with end-to-end quantum training.

HARVEY CARYS ET AL., "Sequence Processing with Quantum-Inspired Tensor Networks," Scientific Reports, Vol. 15, No. 1, 15 August 2023, US, ISSN: 2045-2322, DOI:10.1038/s41598-024-84295-2, presents an example of sequence processing using quantum tensor networks. The work focuses on quantum natural language processing (QNLP) tasks and demonstrates implementations of large-scale quantum tree tensor network models on quantum processors. So, it introduces syntactic and convolutional quantum tensor network architectures supported by tensor trees which are mostly better suited for non-language data such as DNA sequences or MNIST images where syntax doesn't apply. However, the present method and system introduce a hybrid structure in which one or more variational quantum circuits (VQCs) are integrated into the layers of the large language model (LLM) to inject global correlations, enhance model expressivity, and denoise input data features, thereby forming a quantum-circuit-based large language model (QC-LLM). The quantum-circuit-based large language model (QC-LLM) is first simulated within a tensor network quantum simulator executed on a classical computer, ensuring full trainability. Subsequently, the quantum-circuit-based large language model (QC-LLM) is fine-tuned on a quantum computer, the execution of which is orchestrated by the classical computer. This configuration enables the selective injection of non-classical correlations and improved generalization performance, without requiring retraining of the full model on quantum hardware.

Patent document US 10,275,721 B2, which discloses a system and method for using quantum circuits in machine learning. In this approach, classical input data are encoded into quantum states via unitary feature maps, which are subsequently processed by parameterized quantum circuits comprising layers of trainable single-qubit rotations and entangling gates. The measured outputs are classically post-processed for solving supervised or unsupervised learning problems. The patent teaches the use of a hybrid optimization loop, wherein quantum processors evaluate circuit executions and classical processors optimize trainable parameters, including the use of gradient-free optimizers such as Simultaneous Perturbation Stochastic Approximation (SPSA). While the disclosure establishes the principle of quantum circuit learning (QCL) for classification and regression tasks, it does not address the challenges of scaling to large transformer-based language models, nor does it propose tensor network compression or staged quantum refinement after classical training.

Accordingly, there is a need that combine the trainability and scalability of tensor networks with the expressivity and refinement potential of quantum circuits, in a manner compatible with current Noisy Intermediate-Scale Quantum (NISQ) devices. The present invention addresses above mentioned problems by combining tensor network compression, classical training, and selective quantum fine-tuning; thereby providing large language model (LLM) architectures that are scalable, fully trainable, and compatible with existing quantum hardware.

As a result, all the problems listed above require innovation in the relevant field.

## SUMMARY OF THE INVENTION

The present disclosure relates to hybrid quantum-classical training of transformer-based language models using tensor networks and variational quantum circuits that addresses abovementioned challenges and aims make a development in the relevant technical field with the following detailed description. The disclosure is also related to: data processing systems with means for carrying out the methods; computer program products comprising instructions which, when the program products are executed by at least one computing unit, cause the at least one computing unit to carry out the methods; and computer-readable data carrier having stored thereon the computer program products, which may be computer-readable non-transitory storage mediums in some examples.

The set of data and sets of historical data can be diverse, e.g. sensor data, data manually introduced by personnel, data about the environment that the target is in, etc. The data represents features about the target that are to be processed with the neural network.

In the context of the present disclosure. the term "at least one processor" refers to one or more classical processor (e.g central processing unit, graphical processing unit, digital signal processor. field-programmable gate array, etc ). whereas the term 'quantum device" refers to a quantum device or one or more quantum processors. Some steps of methods according to the present disclosure can be performed by quantum devices, which generally results are shorter processing times. In a preferred embodiment the quantum device is Noisy Intermediate-Scale Quantum (NISQ) hardware.

The invention exploits tensor network compression and variational quantum circuits to achieve scalable, memory-efficient, and quantum-enhanced training of transformer-based neural architectures.

An objective of the disclosure is to provide a hybrid quantum-classical training architecture for transformer-based large language models (LLMs) that achieves high compression, scalability, and enhanced expressivity while remaining compatible with current Noisy Intermediate-Scale Quantum (NISQ) devices.

Another objective of the disclosure, creating hybrid architectures in which the bulk of optimization occurs on classical simulators, with quantum processors reserved for targeted, low-depth enhancements.

Another object of the invention is to overcome the barren plateau problem and other non-trainability issues inherent in end-to-end quantum model training, by performing the majority of optimization steps within a quantum simulation by classical computing device.

Another objective of the disclosure is to exploit Matrix Product States (MPS) and Matrix Product Operators (MPO) for compressing the parameter space of transformer-based LLMs, thereby reducing computational cost, memory footprint, and training latency.

Another objective of the disclosure is to integrate a parameterized variational quantum circuit as a modular enhancement block within the LLM architecture.

Another objective of the disclosure is to enable classical training of the integrated VQC within a tensor network quantum simulator using gradient-based optimizers, followed by quantum hardware fine-tuning using gradient-free methods such as Simultaneous Perturbation Stochastic Approximation (SPSA) or quantum-aware Adam variants.

In accordance with embodiments, a system for training a transformer-based large language model (LLM) by at least one classical computer or an apparatus and at least one quantum computer; the classical computer is configured to receiving, by means of the classical computer into a memory medium a large language model (LLM) comprising at least one transformer layer including self-attention layers and multilayer perceptron (MLP) components, each associated with weight matrices of the large language model (LLM); the system comprising: a layer selection module is configured to probe the large language model (LLM) network or at least one of the individual transformer layers by structured noise or synthetic inputs; a converter module is configured to transform an input data into a compressed data using a tensor network (TN), wherein the tensor network (TN) is a Matrix Product State (MPS); an encoding module is configured to encode the inputs by obtaining at least one variational quantum circuit (VQC) from the Matrix Product State (MPS) and Matrix Product Operator (MPO); a preprocessing unit is configured to modify at least one of the transformer layer of the large language model (LLM) by integrating the variational quantum circuit (VQC) prior to each corresponding weight matrix of the self-attention and multi-layer perceptron (MLP) components, wherein the variational quantum circuit (VQC) is configured to inject global correlations, improve model expressivity, and denoise the input data features before while creating a quantum-circuit-based large language model (QC- LLM); a quantum fine-tuning module configured to train the quantum-circuit-based LLM (QC-LLM) within a tensor network quantum simulator using gradient-based optimizer, to provide trained quantum-circuit-based LLM (QC-LLM); means of the classical computer, configured to transmit the trained quantum-circuit-based LLM (QC-LLM) to the quantum computer with a configuration for the quantum computer; the quantum computer is configured to execute the trained quantum-circuit-based LLM (QC-LLM) by initializing quantum states of qubits using by classical weights of the large language model (LLM); and performs, by the quantum computer, a fine-tuning process to the quantum-circuit-based LLM (QC-LLM) for fine-tuning the quantum-circuit-based LLM (QC-LLM) by re-implementing native quantum gate, by applying gradient-free optimization algorithm, without requiring retraining of the complete large language model (LLM) that was initially received; a sampling module is configured to obtain an output vector from the quantum state generated by fine-tuned quantum-circuit-based LLM (QC-LLM); an integrating module integrates the output vector into the large language model (LLM) architecture and stores it into the memory medium.

In accordance with embodiments, a method for training a transformer-based large language model (LLM) by at least one classical computer and at least one quantum computer; the method comprising: receiving, by the classical computer, a large language model (LLM) comprising at least one transformer layer including self-attention layers and multilayer perceptron (MLP) components, each associated with weight matrices of the large language model (LLM); encoding, by the classical computer, an input data into a compressed data using a tensor network (TN), wherein the tensor network (TN) is a Matrix Product State (MPS); obtaining, by the classical computer, a variational quantum circuit (VQC) from the Matrix Product State (MPS) and Matrix Product Operator (MPO); modifying, by the classical computer, at least one of the transformer layer of the large language model (LLM) by integrating the parameterized variational quantum circuit (VQC) prior to each corresponding weight matrix of the self-attention and multi-layer perceptron (MLP) components, wherein the parameterized variational quantum circuit (VQC) is configured to inject global correlations, improve model expressivity, and denoise the input data features before while creating a quantum-circuit-based large language model (QC- LLM); training, by the classical computer, the quantum-circuit-based LLM (QC-LLM) within a tensor network quantum simulator using gradient-based optimizer, to provide trained quantum-circuit-based LLM (QC-LLM); transmitting, by the classical computer, the trained quantum-circuit-based LLM (QC-LLM) to the quantum computer for fine-tuning the quantum-circuit-based LLM (QC-LLM) by re-implementing native quantum gates; executing, by the quantum computer, the trained quantum-circuit-based LLM (QC-LLM), by initializing quantum states of qubits using quantum circuit parameters previously optimized on a classical computer; wherein initializing comprises applying a parameterized quantum circuit U(θ) with parameters θ∈R^n obtained through classical training, such that the resulting quantum state is:

$$| \psi(\theta) \rangle = U(\theta\_1, \theta\_2, ..., \theta\_n) | 0 \rangle^{\{\otimes n\}}$$

In accordance with further embodiments, mentioned parameters represent classically optimized weights of the variational quantum circuit (VQC), derived from simulated gradient-based training within a tensor network framework. During execution on quantum hardware, they are used to re-instantiate the same VQC for further refinement via quantum-native gradient-free optimization.

In accordance with further embodiments, wherein the variational quantum circuit (VQC) is configured to inject global correlations, enhance model expressivity, and denoise input data features prior to generating the quantum-circuit-based large language model (QC-LLM).

In accordance with further embodiments, wherein the method configured to performing the fine-tuning process executed by initializing quantum states of qubits using by classical weights of the large language model (LLM).

In accordance with further embodiments, wherein the fine-tuning process is performed by applying a gradient-free optimization algorithm, without requiring retraining of the complete large language model (LLM) that was initially received.

In accordance with further embodiments, wherein the Matrix Product State (MPS) is configured with a fixed bond dimension to balance input compression and expressivity during training.

In accordance with further embodiments, wherein the variational quantum circuit (VQC) comprises a plurality of parameterized single-qubit rotation gates and entangling two-qubit gates arranged in a mirror-symmetric staircase configuration.

In accordance with further embodiments, wherein the variational quantum circuit (VQC) is integrated into at least one transformer layer of the large language model as a preprocessing block applied prior to each self-attention and multilayer perceptron (MLP) component within the selected transformer later.

In accordance with further embodiments, wherein the gradient-based optimizer is the Adam optimizer, enabling efficient training via backpropagation, and wherein the quantum-circuit-based large language model (QC-LLM) is simulated by using automatic differentiation within a tensor network quantum simulator running on a classical computer.

In accordance with further embodiments, wherein the quantum fine-tuning step on the quantum computer is performed using a gradient-free optimization algorithm selected from the group consisting of Simultaneous Perturbation Stochastic Approximation (SPSA), quantum-aware Adam variants.

In accordance with further embodiments, wherein the quantum computer executes the quantum-circuit-based large language model (QC-LLM) using a native gate set corresponding to the qubit topology of the quantum processor, and wherein the quantum-circuit-based large language model (QC-LLM) is compiled using hardware-aware transpilation techniques.

In accordance with further embodiments, wherein integrating the output vector into the large language model (LLM) architecture, either as enriched input to downstream layers or as a residual signal within intermediate layers of the transformer.

In accordance with further embodiments, the classical processor comprises a plurality of processing sub-units configured by instructions stored on the memory medium to control a layer selection module, an encoding module, a preprocessing unit, a converter module, a quantum fine-tuning module, a sampling module, and an integration module.

Another embodiment of the disclosure, the tensor network (TN) of the input data, which is matrix product state (MPS), encodes token embeddings or intermediate hidden states of the large language model (LLM), thereby reducing memory footprint during training.

Another embodiment of the disclosure, the output of the fine-tuned quantum circuit is post-processed using classical normalization or gating layers before integration into the transformer.

Another embodiment of the disclosure, the variational quantum circuit (VQC) is trained as part of the quantum-circuit-based large language model (QC-LLM) using automatic differentiation within a classical tensor network simulator.

In accordance with further embodiments of the method, which is a computer program product comprising instructions which, when the program is executed by a computer, cause the computer to carry out.

In accordance with embodiments, the system comprises, at least one classical computer that includes a processor that initialized the data and at least one quantum device that communicated the classical computer and includes at least one quantum processor as a processor or processing sub-unit.

In accordance with embodiments the system and the method, provides reducing the computational overhead (e.g., GPU-CPU data transfer and memory utilization) during distributed inference and training operations. These improvements are particularly evident when the reintegration is carried out with the compressed tensors derived from MPO decompositions, where the bond dimension has been optimized to balance representational fidelity and resource efficiency. Thus, the reintegration mechanism is concrete technical means for adapting large-scale transformer models to constrained hardware environments. Accordingly, this feature contributes to the technical character of the invention by enabling: (i) efficient memory management and compute scheduling in multi-GPU architectures; (ii) scalable feedback for real-time inference improvement without full model retraining, and (iii) causal layer-wise influence on the activation space, enabling enhanced task-specific adaptability in LLMs.

In accordance with the embodiments; the trained VQC transpiled to the quantum computer and fine-tuned using a gradient-free optimizer. Measurements of the fine-tuned VQC yield a classical output vector which is normalized and reintegrated into the LLM either as enriched input to downstream layers or as a residual augmentation of intermediate activations. The approach reduces memory footprint via MPS compression while improving representation quality through hardware-aware quantum fine-tuning, thereby enabling scalable training and deployment of compressed LLMs on constrained compute.

Subject matter solution ensures efficient, differentiable data compression by encoding the inputs based on tensor network. TN-trained VQCs which provided by a quantum simulation on classical computer, allow the use of gradient-based training across the full stack. Quantum post-training enhances accuracy without requiring end-to-end quantum execution.

The protection scope of the disclosure is specified in the claims and cannot be limited to the description made for illustrative purposes in this brief and detailed description. It is clear that a person skilled in the art can present similar embodiments in the light of the above and following descriptions without departing from the main theme of the disclosure.

## BRIEF DESCRIPTION OF DRAWINGS

For better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teaching described herein.

Figure 1 shows an example of schematic representation of the hybrid system.

Figure 2 shows an example of schematic representation of the classical computer or apparatus.

Figure 3A represents a flow chart depicting the transformer architecture of the hybrid quantum-classical training pipeline for a transformer-based large language model (LLM).

Figure 3B shows integration of the variational quantum circuit (VQC) into transformer layers,

Figure 4A represents a large language model architecture for some embodiments of the disclosure.

Figure 4B represents a quantum large language model architecture for some embodiments of the disclosure.

Figure 4C illustrates, in the form of a flowchart, the transformer layers of the large language model (LLM), wherein the disclosed method is configured to be applied across any/all transformer layers.

Figure 5A shows a method for selecting transformer layers within the LLM for quantum module injection for some embodiments.

Figure 5B shows sensitivity analysis charts on a compressed model for some embodiments.

Figure 6 represents variational quantum circuit of the method.

Figure 7 shows a perplexity comparison between two other models for some embodiments.

Figure 8 shows a benchmark test results with comparison between two other models for some embodiments.

For a better understanding of the above-mentioned figures, the reference numbers illustrated in the figures are provided for descriptive purposes and are not intended to limit the scope of the disclosure.

**DETAILED DESCRIPTION OF THE INVENTION**

In this detailed description, hybrid quantum-classical training of transformer-based language models using tensor networks and variational quantum circuits is described by means of examples only for clarifying the subject matter without any limitation of the scope of the disclosure.

The present invention relates to a hybrid quantum-classical training architecture for large language models (LLMs), wherein a classical transformer-based model is augmented by a preprocessing unit (14). This module, comprises a (parameterized) variational quantum circuit (VQC) that is derived from a tensor network representation of the input and fine-tuned on quantum hardware.

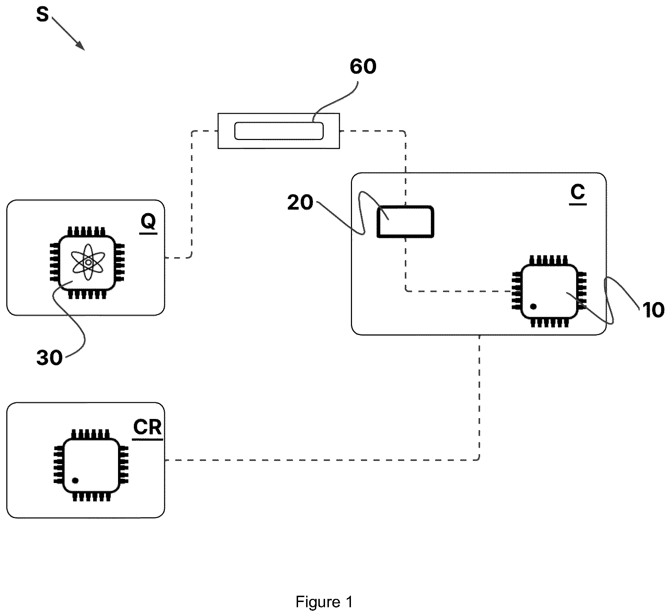

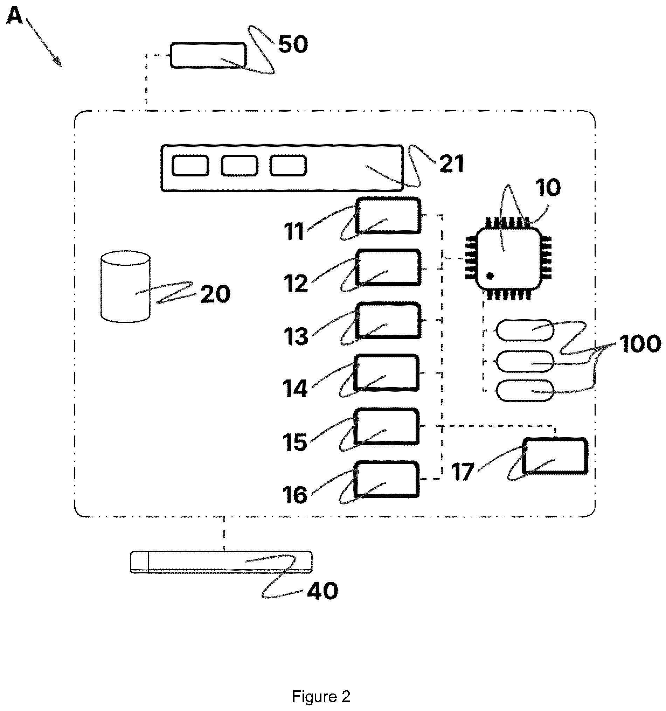

Figure 1 shows the system (S) and Figure 2 shows an apparatus (A) in accordance with embodiments.

The apparatus (A) or system (S) includes one or more classical processors (10). The apparatus (A) also includes at least one memory medium (20) for storage of data, such as, e.g., data obtained about the system (S) for providing an effective resource distribution for the system (S). Additionally, the at least one memory module (20) may store a computer program in the form of instructions that, upon running, perform a method according to the present disclosure.

The apparatus (20) may also include, in some embodiments, a communications module (50) configured to transmit data to and/or receive data from, in wired and/or wireless form, the system and/or computing apparatuses (e.g., one or more controllers, one or more sensors, etc.). For example, the apparatus (A) may transmit operating instructions to, e.g., a quantum computer (Q) or a controller that configures and/or controls operation of the system, which may be an additional computing resource (CR), and/or receive data from controllers and/or sensors, etc.

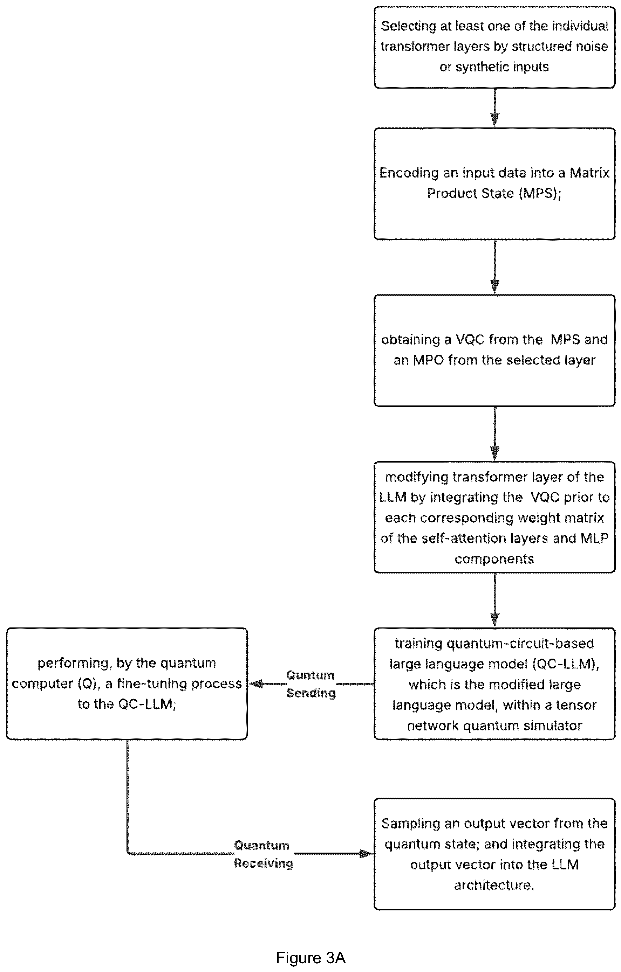

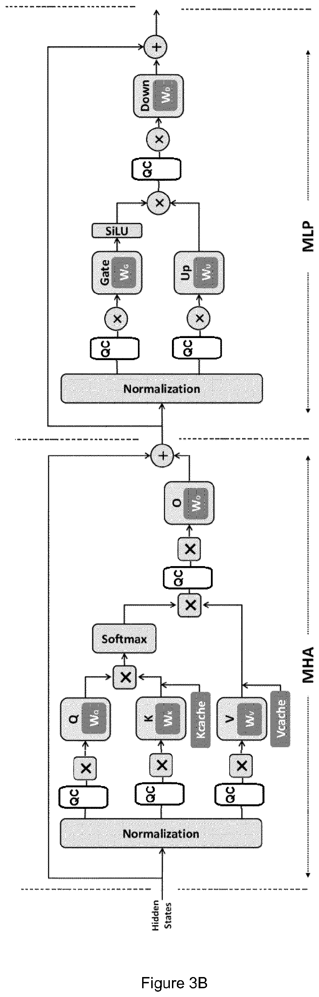

Figure 3A shows, in a flowchart, a method in accordance with embodiments. Figure 3B shows modified structure of the transformation layer of a large language model (LLM) by the method. In some embodiments, the apparatus (A) and/or the system (S) establishes the method.

A computer-implemented method for training a large language model (LLM) by at least one classical computer (C) and at least one quantum computer (Q); wherein the large language model (LLM) comprising at least one transformer layer including self-attention layers and multilayer perceptron (MLP) components, each one of them associated with weight matrices of the large language model (LLM); the method comprising: selecting, by the classical computer (C), at least one of the individual transformer layers by structured noise or synthetic inputs; encoding, by the classical computer (C), an input data into a Matrix Product State (MPS); obtaining, by the classical computer (C), a variational quantum circuit (VQC) from the Matrix Product State (MPS) and a Matrix Product Operator (MPO) from the selected layer; modifying, by the classical computer (C), at least one of the transformer layer of the large language model (LLM) by integrating the variational quantum circuit (VQC) prior to each corresponding weight matrix of the self-attention layers and multi-layer perceptron (MLP) components; training, by the classical computer (C), quantum-circuit-based large language model (QC-LLM), which is the modified large language model, within a tensor network quantum simulator; performing, by the quantum computer (Q), a fine-tuning process to the quantum-circuit-based large language model (QC-LLM); sampling, by the classical computer (C), an output vector from the quantum state; and integrating the output vector into the large language model (LLM) architecture.

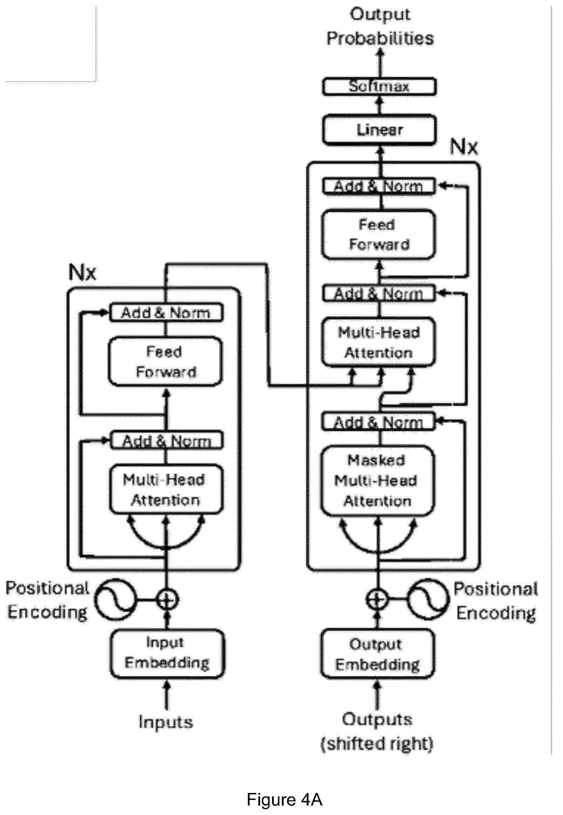

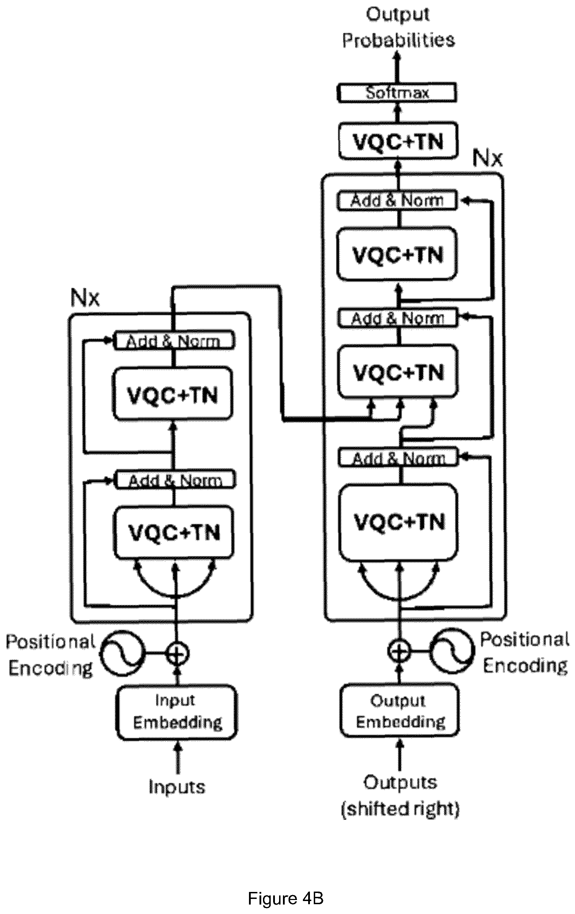

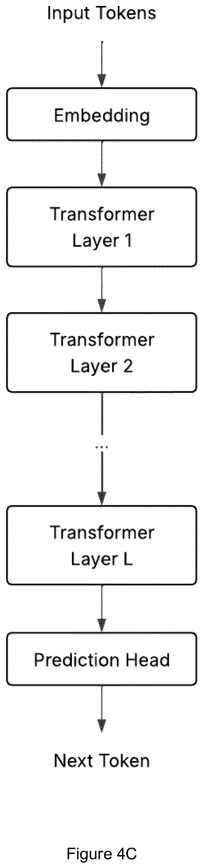

The configuration is initialized by imputing, into the apparatus (A) or a classical computer (C), a standard transformer-based large language model (LLM) that consists of multiple sequential transformer layers. Each transformer layer incorporates a multi-head self-attention (MHA) module and a multilayer perceptron (MLP), together with residual connections and layer normalization units. These transformer layers process the hidden states of input tokens to derive contextualized representations, as schematically depicted in Figures 4A and 4B.

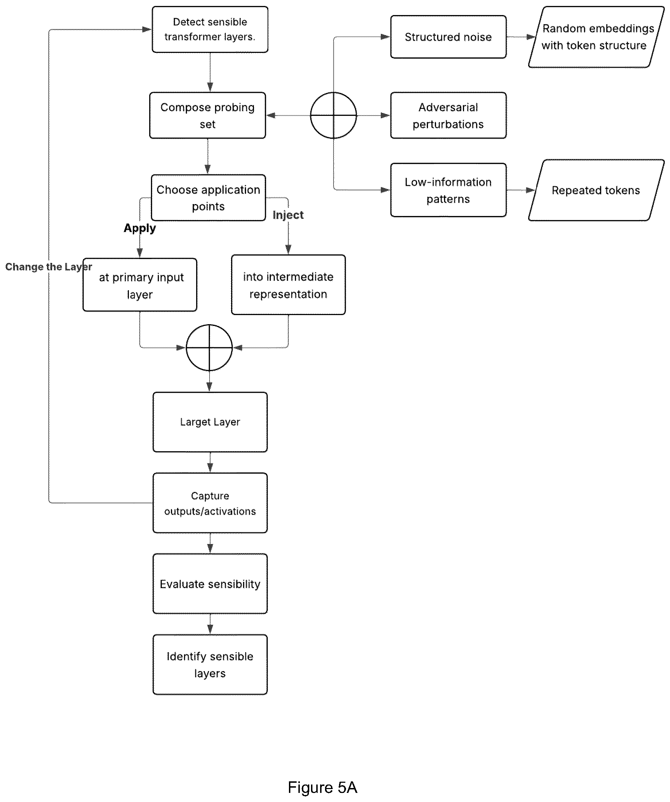

The invention includes a layer selection module (11) that controlled by the classical processor (10) with a configuration stored on a memory medium (20). The configuration detects sensible transformer layers, which includes multi-head self-attention (MHA) and multilayer perceptron (MLP) components, of the large language model (LLM) for selecting for injection a variational quantum circuit (VQC). Figure 5A shows a method for selecting transformer layers within the LLM for quantum module injection.

In some embodiments, to detection of sensible transformer layers of the large language model (LLM), the layer selection module (11) is configured to probe the large language model (LLM) network or at least one of the individual transformer layers by structured noise or synthetic inputs, wherein such inputs are stored on the memory medium (20) or a transitional memory medium (21), and to evaluate the output sensibility resulting from such probing. The probing process may involve feeding the LLM with inputs comprising structured noise-such as random embeddings with preserved token structure-adversarial perturbations, or synthetic low-information patterns, including repeated tokens or uniform distributions. Such inputs may be applied at the primary input layer or directly injected into intermediate representations within the network.

In some embodiments, the layer selection module (11) is further configured to perform a layer-wise intervention, whereby each transformer block, or a subset of its attention and feedforward submodules, is examined by recording the intermediate output from the transformer block and measuring the deviation of said output under the presence of perturbed inputs. This enables the layer selection module (11) to observe how various layers suppress, transform, or amplify the noise signal.

In some embodiments, the layer selection module (11) is adapted to quantify the sensibility of each transformer layer using one or more task-specific or general-purpose evaluation metrics, which may include: perplexity increase over clean input, cosine similarity between clean and noisy outputs, classification token stability, and embedding-space consistency. Transformer layers whose outputs remain semantically interpretable or structurally consistent-i.e., exhibiting low divergence under perturbation-are identified as sensible layers, and such layers are considered suitable candidates for the injection of quantum-enhanced processing modules, which are the variational quantum circuits (VQCs). After the integration, final structure of the transformer layers of the large language model (LLM), which selected transformer layers comprise the variational quantum circuits (VQCs), creates a quantum-circuit-based LLMs (QC-LLM) which is a quantum circuit (60) of the large language model (LLM).

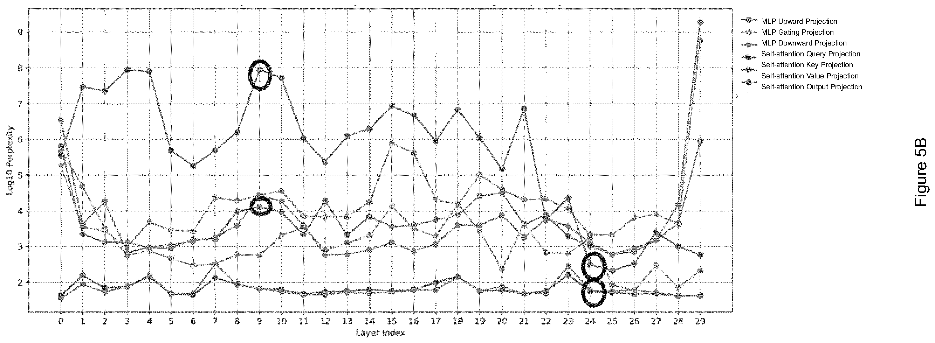

In a preferred embodiment of the invention, the classical processor (10) configured to select the layers based on perplexity analysis. Figure 5B shows sensitivity analysis charts on a compressed model for some embodiments. In a preferred embodiment, the placement of the variational quantum circuit (VQC) within the transformer architecture is guided by empirical perplexity analysis of the sublayers. Measurements indicate that the multilayer perceptron (MLP) gate projection exhibits exceptionally high perplexity (on the order of $10^{12}$), while the MLP downward projection and upward projection layers exhibit perplexities in the range of $10^7$, signifying instability and a tendency to amplify noise. By contrast, the self-attention query and key projections demonstrate stable perplexities near baseline levels, whereas the value projection remains elevated ($\approx 10^6$), identifying it as a further candidate for refinement. Accordingly, the invention integrates the variational quantum circuits (VQCs) selectively into the gate projection and value projection pathways, wherein the quantum-enhanced transformation denoises the compressed tensor representations and stabilizes the activation flow. This selective placement yields a further technical effect: mitigating instability in high-perplexity sublayers while preserving efficiency in stable ones, thereby improving generalization of the large language model without retraining the full architecture.

A converter module (12) that controlled by the digital processor (10) with a configuration stored on the memory medium (20) to proceed the method. The converter module (12) is configured to perform to transform input data, such as token embeddings or intermediate feature vectors, into a matrix product state (MPS); and it is also configured to convert one or more selected transformer layers- for example: identified by the layer selection module (11)-into matrix product operator (MPO). The matrix product state (MPS) and matrix product operator (MPO) conversion step enables compression of high-dimensional input vectors into a sequential format with predefined bond dimension $\chi$, facilitating efficient classical computation while preserving key contextual correlations. The matrix product operator (MPO) transformation of the selected transformer layer, enables structured representation of layer weights and operations, supporting tensor network-based simulation and optimization. This conversion mechanism ensures architectural consistency between inputs and selected internal layers, thereby enabling seamless integration of tensorized operations, efficient backpropagation, and compatibility with downstream quantum enhancement modules.

In some embodiments, the Matrix Product State (MPS) is configured with a fixed bond dimension to balance input compression and expressivity during training. The bond dimension $\chi$ is a truncation parameter and determines how many singular values are kept during the decomposition of the weight matrices. This, directly affect the fidelity of the model and compression ratio. So, encoding established with a predefined bond dimension $\chi$, ensuring compression while retaining contextual correlations.

The matrix product state (MPS) of the inputs is used to parameterize the variational quantum circuit (VQC), which is trained to extract global correlations and enhance the semantic encoding of the input. With this configuration, which is stored on the memory medium (20), encoding module (13) encodes the inputs to the variational quantum circuit (VQC).

The encoded variational quantum circuit (VQC) is applied by a preprocessing unit (14) before the weight matrices of the multi-head self-attention (MHA) and multilayer perceptron (MLP) components in selected transformer layers by the layer selection module (11). This integration transforms the large language model (LLM) into the quantum-circuit-based LLM (QC-LLM) to providing quantum circuit (60).

In some embodiments, the quantum-circuit-based LLM (QC-LLM) which is a modified and parametrized variational quantum circuit (VQC), receives classical inputs from the matrix product state (MPS) and, the transform layer as a matrix product operator (MPO), which both are tensor network. The quantum-circuit-based LLM (QC-LLM), including quantum layer initialized as identity, is executed in a classical simulator using tensor network contraction. The model is trained end-to-end using backpropagation and gradient-based optimizers such as Adam, exploiting the differentiable simulation of the quantum module.

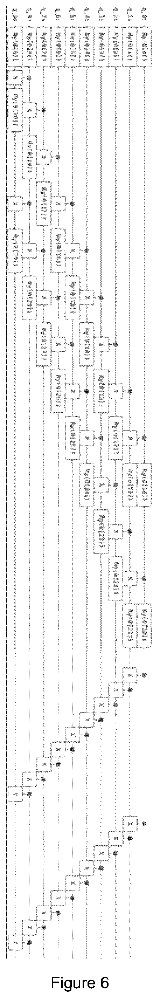

In a preferred embodiment of the method or the apparatus (A) that establishes the method, the variational quantum circuit (VQC) is designed as a shallow, hardware-efficient ansatz that supports classical simulation during training and direct implementation on NISQ-era quantum processors during post-training refinement. In a preferred embodiment, the variational quantum circuit (VQC), which defines quantum ansatz layer of the large language model (LLM), comprises a register of ten qubits and is composed of multiple layers of trainable and entangling operations. The structure of the variational quantum circuit (VQC), including extra CNOT gates, is shown in Figure 6 and described below.

The variational quantum circuit (VQC) is initialized using single-qubit rotation gates around the Y-axis (Ry gates), each parameterized by a distinct trainable angle. (Each qubit $q_i$ receives a single-qubit rotation gate $R_y(\theta_i)$, where $\theta_i$ is a trainable parameter.) These rotations are applied uniformly across all qubits and act as the feature encoding and initial variational layer. This layer encodes the classical features into quantum amplitudes via parameterized real-valued rotations.

Following initialization, the variational quantum circuit (VQC) introduces global correlations via controlled-NOT (CNOT) gates, which are applied in a staggered, mirror-symmetric pattern to entangle alternating pairs of qubits. This two-stage entanglement structure ensures that all adjacent qubit pairs are entangled over successive layers, promoting expressivity while keeping circuit depth minimal.

- In the second layer, Controlled-NOT (CNOT) gates are applied between even-indexed qubit pairs: $q_1, q_0 \rightarrow q_1, q_2 \rightarrow q_3, q_4 \rightarrow q_5$ etc., followed by another set of $R_y(\theta_i)$ gates.

- In the third layer, CNOT gates are then applied to odd-indexed pairs: $q_1 \rightarrow q_2, q_3 \rightarrow q_4, q_5 \rightarrow q_6$ and so forth, followed again by additional $R_y(\theta_i)$ rotations.

Furthermore, these parameterized gates facilitate efficient gradient-based learning during classical simulation, as they maintain differentiability throughout the circuit. The resulting layered configuration-comprising alternating entanglement and rotation stages-enables scalable entanglement propagation and rich feature mixing across the entire qubit register, all while maintaining a low overall circuit depth compatible with NISQ-era hardware.

Example-1

In a preferred embodiment of the method or the apparatus (A), the memory medium (20) is configured to store followings for the digital processor (10), which it configures to the quantum computer (Q).

```
Class QuantumMPSProcessor:
    Method __init__(num_qubits=10, shots=128, backend=None, vqc_layers=2,
entanglement='reverse_linear'):
        # Initialize quantum circuit parameters
        SET self.num_qubits TO num_qubits
        SET self.shots TO shots
        SET self.backend TO backend
        SET self.num_layers_init TO 2  # Initial encoding layers (e.g., Ry rotations)

        # Define variational ansatz with real-valued parameters
        DEFINE self.ansatz AS RealAmplitudesCircuit(
            num_qubits=self.num_qubits,
            reps=vqc_layers,
            entanglement=entanglement,
            use_barriers=False,
            flatten_parameters=True
        )
```

```
Method build_variational_circuit(parameters):
    INITIALIZE empty quantum circuit qc with self.num_qubits qubits

    # === Layer 1: Initial parameterized Ry rotations ===
    FOR q FROM 0 TO self.num_qubits - 1:
        APPLY Ry(parameters[q]) TO qubit q

    # === Layer 2: Entanglement layer 1 (even pairs) ===
    FOR q FROM 0 TO self.num_qubits - 2 STEP 2:
        APPLY CNOT(q, q+1)
        APPLY Ry(parameters[self.num_qubits + q]) TO qubit q+1

    # === Layer 3: Entanglement layer 2 (odd pairs) ===
    FOR q FROM 1 TO self.num_qubits - 2 STEP 2:
        APPLY CNOT(q, q+1)
        APPLY Ry(parameters[self.num_qubits*2 + q]) TO qubit q+1

    RETURN qc


Method execute_circuit(input_parameters):
    # Bind input_parameters to ansatz or build custom circuit
    BUILD quantum circuit using build_variational_circuit(input_parameters)
    TRANSPILATE circuit for target backend
    EXECUTE circuit on backend with specified shots
    MEASURE qubits and COLLECT output probabilities or samples
    RETURN measurement results
```

This configuration allows the quantum-circuit-based LLM (QC-LLM), which is a variational quantum circuit (VQC), to maintain classical trainability during simulation, while supporting direct mapping to quantum hardware with linear connectivity constraints. It also allows to integration of quantum-enhanced layer into the transformer architecture as a preprocessing or auxiliary block by the classical processor (10).

In some embodiments, the quantum computer (Q) executes the trained quantum-circuit-based LLM (QC-LLM), by initializing quantum states of qubits using quantum circuit (60) parameters previously optimized on a classical computer (C); wherein initializing comprises applying a parameterized quantum circuit $U(\theta)$ with parameters $\theta \in R^n$ obtained through classical training, such that the resulting quantum state is:

$$| \psi(\theta) \rangle = U(\theta\_1, \theta\_2, \dots, \theta\_n) | 0 \rangle^{\{ \otimes n \}}$$

Furthermore, these parameters represent classically optimized weights of the variational quantum circuit (VQC), derived from simulated gradient-based training within a tensor network framework. During execution on quantum hardware, they are used to re-instantiate the same variational quantum circuit (VQC) for further refinement via quantum-native gradient-free optimization.

In a preferred embodiment, the apparatus (A) includes a quantum fine-tuning module (15) configured to operate after the classical training of the quantum-circuit-based LLM (QC-LLM) architecture is complete. The quantum fine-tuning module (15) is configured to re-implementation of the logical circuit on a quantum processor (QPU) (30) using hardware-native gates. In these embodiments, the variational quantum circuit (VQC) component, which was initially trained in a fully differentiable manner using classical tensor network simulators, is subsequently exported to actual quantum hardware for refinement. This transition is initiated by mapping the trained parameters of the variational quantum circuit (VQC) onto a native quantum circuit representation compatible with the quantum processor (QPU) (30), such as superconducting qubits, trapped ions, or neutral atoms. Hardware-aware transpilation techniques are employed to translate the tensorized VQC into executable gate sequences that respect device-specific constraints, including native gate sets, qubit connectivity topology, coherence times, and error rates.

In some embodiments, once the variational quantum circuit (VQC) has been ported to a quantum processor (30), the circuit undergoes a fine-tuning stage executed directly on quantum hardware. During this stage, the quantum computer (Q) performs variational updates of the circuit parameters to adapt the model to hardware-native characteristics. Since quantum sampling is inherently stochastic and non-differentiable, the fine-tuning process does not employ classical backpropagation but instead relies on gradient-free optimization algorithms, such as Simultaneous Perturbation Stochastic Approximation (SPSA) or quantum-aware Adam variants. The purpose of this fine-tuning is to heal the learned representation, thereby compensating for discrepancies introduced during classical simulation and extracting additional performance gains by exploiting quantum entanglement and device-specific behavior.

In some embodiments, once the quantum-circuit-based LLM (QC-LLM), which as a parameterized variational quantum circuit, has been fully trained in a classical simulation environment -specifically, a tensor network-based quantum circuit simulator- the learned parameters are ported to a quantum execution platform for physical realization on quantum hardware. To providing this, the invention includes a quantum fine-tuning module (15) configured to operate after the classical training of the quantum-circuit-based LLM (QC-LLM) architecture is complete. The quantum fine-tuning module (15) is configured to re-implementation of the logical circuit on a target quantum processor (30) using hardware-native gates. In these embodiments, the variational quantum circuit (VQC) component is subsequently exported to actual quantum hardware for refinement. To enable this transition, a hardware-aware transpilation process is applied to convert the logical quantum circuit into an executable form compatible with the native gate set and physical topology of the target quantum processor (30).

The transpilation process performs the following steps:

- Gate Decomposition: All parameterized single-qubit rotation gates (e.g., $Ry(\theta i)Ry(\theta i)$) and multi-qubit entangling gates (e.g., CNOT, CZ) are decomposed into the native gate primitives supported by the hardware backend. This ensures that quantum instructions are executable without emulation.

- Topology Mapping: The logical qubit layout is mapped to the physical qubit topology (e.g., linear chain, 2D grid, IBM's heavy-hex topology). This mapping accounts for physical connectivity constraints and qubit calibration properties.

- Routing and SWAP Insertion: For cases where direct two-qubit interactions are not physically allowed, SWAP gates are inserted along optimized paths to bring qubits into adjacent positions required for entangling operations. This routing strategy is aware of device connectivity and latency.

- Circuit Depth Optimization: The transpilation process further performs circuit depth minimization to reduce noise and decoherence. This mitigates decoherence and noise accumulation, thereby improving fidelity during execution on Noisy Intermediate-Scale Quantum (NISQ) hardware.

In some embodiments, fine-tuning is performed by quantum computer (Q) with quantum processor (QPU) (30) using gradient-free optimization algorithms, such as Simultaneous Perturbation Stochastic Approximation (SPSA) or quantum-aware Adam variants. Crucially, this quantum refinement is localized to the variational quantum circuit (VQC) only and does not require retraining the full LLM stack.

In accordance with embodiments, preferred transpilation frameworks may include Qiskit (IBM), TKET (Quantinuum), and Braket SDK (Amazon).

In accordance with embodiments, execution of the fine-tuned quantum-circuit-based large language model (QC-LLM), depends on compatibility with the native gate set of the target device which are for IBM Q, {u1, u2, u3, CX}; for IonQ, Arbitrary single-qubit rotations and fully connected two-qubit gates; for Quantinuum high-fidelity CZ and ZZ gates with native gate synthesis; for Rigetti (Aspen), $Rx(\theta)$, $Rz(\theta)$, CZ. The invention is designed to accommodate these differences by employing parameter-resolved gate templates that allow for flexible substitution. For instance, the standard $Ry(\theta)$ gates in the variational quantum circuit (VQC) may be replaced with equivalent $Rz(\theta 1)\ Rx(\theta 2)\ Rz(\theta 3)$ sequences for hardware-native compatibility.

In a preferred embodiment of the invention, once the parameterized variational quantum circuit (VQC) has been fine-tuned by the quantum computer (Q), the resulting quantum state is measured to obtain a classical output vector. The output vector represents a quantum-enhanced transformation of the compressed representation initially encoded via the matrix product state (MPS) and processed through the classically trained tensor network (TN) architecture.

The classical computer (C), in some embodiments, a sampling module (16), obtains the output vector from the measured quantum state. The sampled vector is then reintegrated into the transformer-based large language model (LLM) architecture by an integration module (17). Two primary reintegration strategies are employed:

(i) As enriched input to downstream transformer layers, such as feeding the output vector into the next attention or feedforward block of the LLM.

(ii) As a residual augmentation within the same transformer layer from which the compressed representation originated, enabling mid-layer correction or enhancement of token-level activations.

The integration module (17) improves the generalization performance of the large language model (LLM), denoises intermediate hidden states, and enhances the global consistency of token generation. It allows the quantum enhancement to propagate through the model without requiring end-to-end quantum execution, preserving compatibility with existing transformer checkpoints and pretrained models.

In some embodiments, the output vector-obtained via the quantum-inspired tensor network compression or quantum-enhanced transformation-is reintroduced into the LLM inference pipeline by the integration module (17). This reintegration may occur either at the input layer (as enriched contextual input) or injected into mid-layers as a residual signal that modifies internal activations. Technically, this reintegration step contributes to improved inference efficiency and accuracy by exploiting compressed correlation representations derived from the tensorized or hybrid quantum-classical architecture. Specifically, this feedback enables layer-wise residual adaptation without retraining, which supports dynamic inference adaptation based on quantum-enhanced latent representations.

The reintegration mechanism thus serves as a lightweight post-training augmentation pipeline, allowing the benefits of quantum fine-tuning to be reflected in the downstream natural language processing (NLP) performance, while retaining full trainability and deployability on classical hardware.

In accordance with embodiments, the system (S) for training a transformer-based large language model (LLM) by at least one classical computer (C) and at least one quantum computer (Q); the classical computer (C) is configured to receiving, by means of the classical computer (C) into a memory medium (20) a large language model (LLM) comprising at least one transformer layer including self-attention layers and multilayer perceptron (MLP) components, each associated with weight matrices of the large language model (LLM); the system (S) comprising: a layer selection module (11) is configured to probe the large language model (LLM) network or at least one of the individual transformer layers by structured noise or synthetic inputs; a converter module (12) is configured to transform an input data into a compressed data using a tensor network (TN), wherein the tensor network (TN) is a Matrix Product State (MPS); an encoding module (13) is configured to encode the inputs by obtaining at least one variational quantum circuit (VQC) from the Matrix Product State (MPS) and Matrix Product Operator (MPO); a preprocessing unit (14) is configured to modify at least one of the transformer layer of the large language model (LLM) by integrating the variational quantum circuit (VQC) prior to each corresponding weight matrix of the self-attention layers and multi-layer perceptron (MLP) components, wherein the variational quantum circuit (VQC) is configured to inject global correlations, improve model expressivity, and denoise the input data features before while creating a quantum-circuit-based large language model (QC- LLM); a quantum fine-tuning module (15) configured to train the quantum-circuit-based LLM (QC-LLM) within a tensor network quantum simulator using gradient-based optimizer, to provide trained quantum-circuit-based LLM (QC-LLM); means of the classical computer (C), configured to transmit the trained quantum-circuit-based LLM (QC-LLM) to the quantum computer (Q) with a configuration for the quantum computer (Q); the quantum computer (Q) is configured to execute the trained quantum-circuit-based LLM (QC-LLM) by initializing quantum states of qubits using by classical weights of the large language model (LLM); and performs, by the quantum computer (Q), a fine-tuning process to the quantum-circuit-based LLM (QC-LLM) for fine-tuning the quantum-circuit-based LLM (QC-LLM) by re-implementing native quantum gate, by applying gradient-free optimization algorithm, without requiring retraining of the complete large language model (LLM) that was initially received; a sampling module (16) is configured to obtain an output vector from the quantum state generated by fine-tuned quantum-circuit-based LLM (QC-LLM); an integrating module (17) integrates the output vector into the large language model (LLM) architecture and stores it into the memory medium (20).

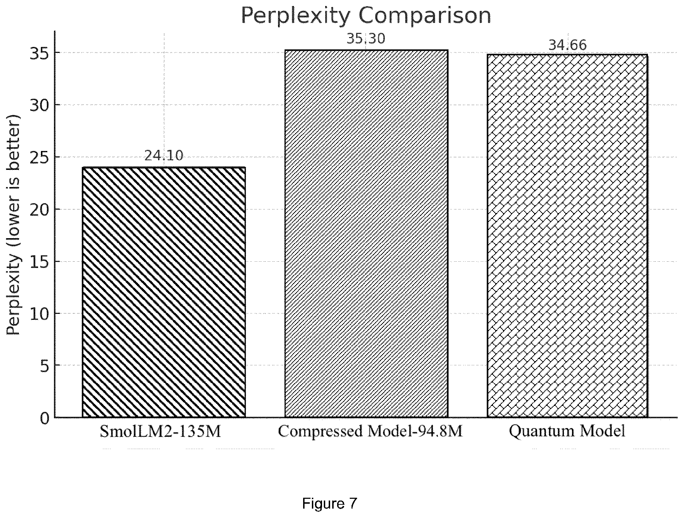

Figure 7 shows a perplexity comparison between (left-to-right) the original model SmolLM2-135M parameters, and compressed version including 94.8M parameters, and the model that provided by the method (quantum) in some embodiments.

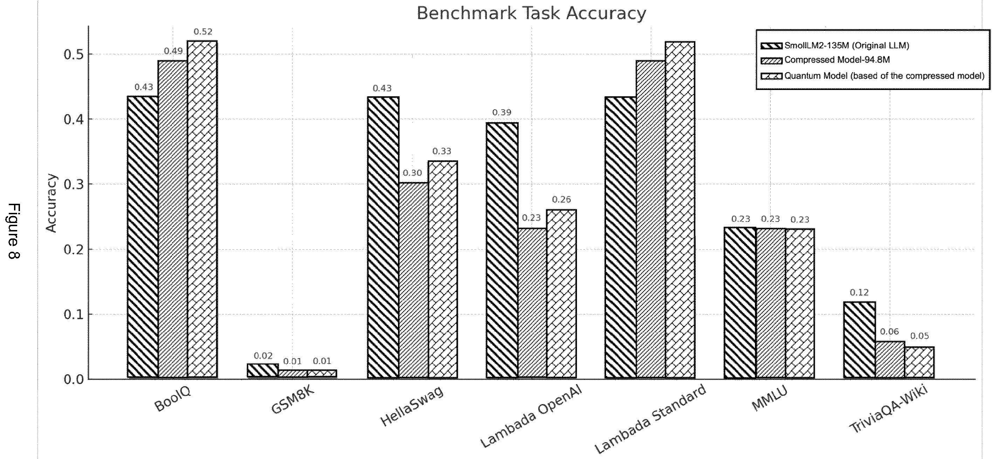

Figure 8 shows a benchmark results in some embodiments with comparison between three models mentioned above. Regarding benchmark results, quantum large language model has significant effect on the other models, especially BoolQ benchmark, which has goal to measure reading comprehension and reasoning, specifically whether models can: read a passage, understand the semantics, answer a binary yes/no question correctly.

In some embodiments, the system (S) implements post-compilation error mitigation methods to improve the fidelity of quantum circuit outputs. These methods may include readout error calibration, which corrects classical bit-flip errors during measurement; zero noise extrapolation (ZNE), which involves executing quantum circuits at different noise levels and estimating the ideal result by extrapolating to zero noise; and probabilistic error cancellation, which uses quasi-probability techniques to statistically reverse the effects of known noise in gate operations.

In accordance with embodiments, the variational quantum circuit (VQC) is designed with shallow circuit depth and symmetric entanglement, which helps suppress the impact of gate noise and idle decoherence. The use of classical post-processing on the sampled output vector further stabilizes the integration into the large language model (LLM).

In accordance with embodiments, the variational quantum circuit (VQC) operates on a minimal set of qubits (e.g.,

10) and is structured to permit qubit reuse across different token positions or transformer layers using mid-circuit measurement and reset operations, where supported. This ensures compatibility with quantum hardware offering limited qubit counts.

In accordance with embodiments, the digital processor (10), may execute a predictive engine that functions to provide predictions by using large language models (LLMs) or machine learning models stored in the memory medium (20). The predictive engine may build a predictive algorithm through large language models (LLMs) or machine learning models.

In accordance with embodiments, there may be a plurality of processing sub-units (100), which are sub processors that are used by the digital processor (10), and these processing sub-units (100) may function in parallel and perform certain functions. The additional computing resources (CR) may include at least one display, and it may be, but not limited to, a computer monitor or an LCD display such as that for a tablet device which may be a part of an input module (40). The user interface may be an Application Programming Interface (API) or a web-based application that is accessible via the network unit. The network unit may be a standard network adapter such as an Ethernet or 802.11x adapter. To providing this, the system (S) and the apparatus (A) may include a communication module (50).

Alternatively, the digital processor (10), can also execute or be in relation with a graphical user interface (GUI) engine that is used to generate various GUIs. The GUI engine provides data according to a certain layout for each user interface and also receives data input or control inputs from a user. The GUI then uses the inputs from the user to change the data that is shown on the current user interface or changes the operation of the server which may include showing a different user interface.

The classical computer (C) may include one or more classical processors, e.g., digital processor (10). In some implementations, the one or more classical processors, e.g., digital processor (10) may include supercomputers, i.e., computers with high levels of computational capacity. For example, the classical processor may represent a computational system with a large number of processors, e.g., a distributed computing system or a computer cluster.

An additional computing resources (CR) or the classical computer (C) may include one or more quantum simulators, e.g., quantum simulator. A quantum simulator is a quantum computer (Q) that may be programmed to simulate other quantum systems and their properties. Example quantum simulators include experimental platforms such as systems of ultracold quantum gases, trapped ions, photonic systems or superconducting circuits.

In accordance with embodiments, the method and system (S) of the present disclosure can be applied to any computational system having the configurations set out above. In a preferred embodiment of the disclosure, the tensor network section of the method, executed by the digital processor (10), may run on a central processing unit (CPU), a graphical processing unit (GPU), or a field-programmable gate array (FPGA). This implementation choice is not intended to limit the scope of the disclosure.

The memory medium (20) may store the program instructions for an operating system, program code for other applications, an input module, a plurality of machine learning models, an output module, and a database. The machine learning models may include, but are not limited to, image recognition and categorization algorithms based on deep learning models and other approaches. The database may be, for example, a local database, an external database, a database on the cloud, multiple databases, or a combination thereof.

The programs comprise program code that, when executed, configures the classical processor (10), which is at least one processor to operate in a particular manner to implement various functions and tools for the system (S).

The method and system (S) of the present disclosure are applicable to any computational system having the configurations set forth above. In operation, the at least one classical processor (10) configures the quantum-circuit-based large language model (QC-LLM) and executes a simulation to obtain intermediate results. The method further comprises fine-tuning the large language model (LLM) based on quantum mechanical operations, the fine-tuning being performed by the quantum computer (Q), thereby generating output results for the user(s).

**REFERENCE NUMERALS**

10. Classical Processor
100. Processing sub-units

11. Layer selection module
12. Converter module
13. Encoding module
14. Preprocessing unit
15. Quantum fine-tuning module
16. Sampling module

17. Integrating module

20. Memory medium
21. Transitional memory medium
30. Quantum processor
40. Input module
50. Communication module
60. Quantum circuit
A. Apparatus
C. Classical computer
CR. Additional computing resource
Q. Quantum Computer
S. System

**Definitions in the disclosure**

$\chi$: bond dimension
MPO: Matrix Product Operator
MPS: Matrix Product State
LLM: Large language model
VQC: Variational Quantum Circuit
QC-LLM: Quantum-circuit-based large language model
MLP: Multilayer perceptron
MHA: Multi-head self-attention layer
W: Weight matrix

**Claims**

1. A computer-implemented method for training a large language model (LLM) by at least one classical computer (C) and at least one quantum computer (Q); wherein the large language model (LLM) comprising at least one transformer layer including self-attention layers and multilayer perceptron (MLP) components, each one of them associated with weight matrices of the large language model (LLM); the method comprising:

   selecting, by the classical computer (C), at least one of the individual transformer layers by structured noise or synthetic inputs;
   encoding, by the classical computer (C), an input data into a Matrix Product State (MPS);
   obtaining, by the classical computer (C), a variational quantum circuit (VQC) from the Matrix Product State (MPS) and a Matrix Product Operator (MPO) from the selected layer;
   modifying, by the classical computer (C), at least one of the transformer layer of the large language model (LLM) by integrating the variational quantum circuit (VQC) prior to each corresponding weight matrix of the self-attention layers and multi-layer perceptron (MLP) components;
   training, by the classical computer (C), quantum-circuit-based large language model (QC-LLM), which is the modified large language model, within a tensor network quantum simulator;
   performing, by the quantum computer (Q), a fine-tuning process to the quantum-circuit-based large language model (QC-LLM);
   sampling, by the classical computer (C), an output vector from the quantum state; and integrating the output vector into the large language model (LLM) architecture.

2. The method according to claim 1, wherein the variational quantum circuit (VQC) is configured to inject global correlations, improve model expressivity, and denoise the input data features before while creating a quantum-circuit-based large language model (QC- LLM);

3. The method according to claim 1, wherein the variational quantum circuit (VQC) is configured to inject global correlations, enhance model expressivity, and denoise input data features prior to generating the quantum-circuit-based large language model (QC-LLM).

4. The method according to any one of the preceding claims, wherein performing the fine-tuning process executed by initializing quantum states of qubits using by classical weights of the large language model (LLM).

5. The method according to any one of the preceding claims, wherein the fine-tuning process comprises initializing the quantum states of the qubits by classical weights derived from the large language model (LLM).

6. The method according to claim 5, wherein the fine-tuning process is performed by applying a gradient-free optimization algorithm, without requiring retraining of the complete large language model (LLM) that was initially received.

7. The method according to claim 1, wherein the Matrix Product State (MPS) is configured with a fixed bond dimension to balance input compression and expressivity during training.

8. The method according to any one of the preceding claims, wherein the variational quantum circuit (VQC) comprises a plurality of parameterized single-qubit rotation gates and entangling two-qubit gates arranged in a mirror-symmetric staircase configuration.

9. The method according to any one of the preceding claims, wherein the variational quantum circuit (VQC) is integrated into at least one transformer layer of the large language model as a preprocessing block applied prior to each self-attention and multilayer perceptron (MLP) component within the selected transformer later.

10. The method according to any one of the preceding claims, wherein the gradient-based optimizer is the Adam optimizer, enabling efficient training via backpropagation, and wherein the quantum-circuit-based large language model (QC-LLM) is simulated by using automatic differentiation within a tensor network quantum simulator running on a classical computer (C).

11. The method according to claim 6, wherein the quantum fine-tuning step on the quantum computer (Q) is performed using a gradient-free optimization algorithm selected from the group consisting of Simultaneous Perturbation Stochastic Approximation (SPSA), quantum-aware Adam variants.

12. The method according to claim 5, wherein the quantum computer (Q) executes the quantum-circuit-based large language model (QC-LLM) using a native gate set corresponding to the qubit topology of the quantum processor (30), and wherein the quantum-circuit-based large language model (QC-LLM) is compiled using hardware-aware transpilation techniques.

13. The method according to any one of the preceding claims, wherein integrating the output vector into the large language model (LLM) architecture, either as enriched input to downstream layers or as a residual signal within intermediate layers of the transformer.

14. A computing apparatus (A) for training one or more of a plurality of transformer-based large language model (LLM); configured to communicate a quantum computer (Q) comprises at least one quantum processor (30), the computing apparatus (A) comprises one or more classical processor (10), and at least one memory medium (20) storing in non-transient form data defining program code executable by the one or more digital processor (10) wherein the program code, when executed by the one or more digital processors (10), causes the computing apparatus to:

    receive a large language model (LLM) and obtaining transformer layers of the large language model (LLM);
    encoding an input data into compress data based on a tensor network (TN);
    obtain one or more variational quantum circuit (VQC) per one component of the transformer layers of the large language model (LLM), wherein integrate each variational quantum circuit (VQC) prior to each corresponding weight matrix of the layers;
    train the large language model (LLM) comprises variational quantum circuits by tensor network quantum simulator;
    and the computing apparatus (A) further configured to transmit the trained large language model (LLM) to the quantum processor (30) with a configuration for fine-tuning process of the trained large language model (LLM) to initializing quantum states of qubits using classical weights of the large language model (LLM); and receives an output vector from quantum state;
    sampling the output vector and integrating sampling results into the large language model (LLM) architecture.

15. A system (S) for training a transformer-based large language model (LLM) by at least one classical computer (C) and at least one quantum computer (Q); the classical computer (C) is configured to receiving, by means of the classical computer (C) into a memory medium (20) a large language model (LLM) comprising at least one transformer layer including self-attention layers and multilayer perceptron (MLP) components, each associated with weight matrices of the large language model (LLM); the system (S) comprising:

a layer selection module (11) is configured to probe the large language model (LLM) network or at least one of the individual transformer layers by structured noise or synthetic inputs;

a converter module (12) is configured to transform an input data into a compressed data using a tensor network (TN), wherein the tensor network (TN) is a Matrix Product State (MPS);

an encoding module (13) is configured to encode the inputs by obtaining at least one variational quantum circuit (VQC) from the Matrix Product State (MPS) and Matrix Product Operator (MPO);

a preprocessing unit (14) is configured to modify at least one of the transformer layer of the large language model (LLM) by integrating the variational quantum circuit (VQC) prior to each corresponding weight matrix of the self-attention and multi-layer perceptron (MLP) components;

a quantum fine-tuning module (15) configured to train the quantum-circuit-based LLM (QC-LLM) within a tensor network quantum simulator using gradient-based optimizer, to provide trained quantum-circuit-based LLM (QC-LLM);

means of the classical computer (C), configured to transmit the trained quantum-circuit-based LLM (QC-LLM) to the quantum computer (Q) with a configuration for the quantum computer (Q);

the quantum computer (Q) is configured to execute the trained quantum-circuit-based LLM (QC-LLM) by initializing quantum states of qubits using by classical weights of the large language model (LLM); and performs, by the quantum computer (Q), a fine-tuning process to the quantum-circuit-based LLM (QC-LLM) for fine-tuning the quantum-circuit-based LLM (QC-LLM) by re-implementing native quantum gate, by applying gradient-free optimization algorithm, without requiring retraining of the complete large language model (LLM) that was initially received;

a sampling module (16) is configured to obtain an output vector from the quantum state generated by fine-tuned quantum-circuit-based LLM (QC-LLM);

an integrating module (17) integrates the output vector into the large language model (LLM) architecture and stores it into the memory medium (20).

16. The system (S) according to claim 17, wherein the classical processor (10) comprises a plurality of processing sub-units (100) configured by instructions stored on the memory medium (20) to control a layer selection module (11), an encoding module (12), a preprocessing unit (13), a converter module (14), a quantum fine-tuning module (15), a sampling module (16), and an integration module (17).

Figure 1

Figure 2

Figure 3A

Figure 3B

Figure 4A

Figure 4B

Input Tokens

↓

Embedding

↓

Transformer
Layer 1

↓

Transformer
Layer 2

...

↓

Transformer
Layer L

↓

Prediction Head

↓

Next Token

Figure 4C

Figure 5A

Figure 5B

Figure 6

Figure 7

Figure 8

**EUROPEAN SEARCH REPORT**

Europäisches
Patentamt
European
Patent Office
Office européen
des brevets

Application Number

EP 25 20 5011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Aizpurua Borja ET AL: "Quantum Large Language Models via Tensor Network Disentanglers", arXiv.org, 22 October 2024 (2024-10-22), XP093323452, Retrieved from the Internet: URL:https://arxiv.org/pdf/2410.17397 [retrieved on 2026-01-19] * page 1 - page 3 * | 1-16 | INV. G06N3/045 G06N3/084 G06N10/20 G06N10/60 |
| A,D | ANDREI TOMUT ET AL: "CompactifAI: Extreme Compression of Large Language Models using Quantum-Inspired Tensor Networks", ARXIV.ORG, CORNELL UNIVERSITY LIBRARY, 201 OLIN LIBRARY CORNELL UNIVERSITY ITHACA, NY 14853, 13 May 2024 (2024-05-13), XP091753837, * page 1 - page 4 * | 1-16 | |
| A | HANNAH LANGE ET AL: "Transformer neural networks and quantum simulators: a hybrid approach for simulating strongly correlated systems", ARXIV.ORG, CORNELL UNIVERSITY LIBRARY, 201 OLIN LIBRARY CORNELL UNIVERSITY ITHACA, NY 14853, 19 March 2025 (2025-03-19), XP091963867, * page 1 - page 5 * | 1-16 | TECHNICAL FIELDS SEARCHED (IPC) G06N |

The present search report has been drawn up for all claims

| Place of search | Date of completion of the search | Examiner |
|---|---|---|
| The Hague | 23 January 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10275721 B2

**Non-patent literature cited in the description**

- **ANDREI TORMUT et al.** CompactifAI: Extreme Compression of Large Language Models using Quantum-Inspired Tensor Networks. *arXiv preprint arXiv:2401.14109*, 2024
- **B. AIZPURUA et al.** Quantum Large Language Models via Tensor Network Disentanglers. *arXiv:2410.17397v1*, 2024
- **HARVEY CARYS et al.** Sequence Processing with Quantum-Inspired Tensor Networks. *Scientific Reports*, 15 August 2023, vol. 15 (1), ISSN 2045-2322